# EUROPÄISCHE PATENTSCHRIFT

(11) **EP 3 640 582 B1**
(45) Veröffentlichungstag und Bekanntmachung des Hinweises auf die Patenterteilung: **12.08.2020**
(21) Anmeldenummer: 18200557.9
(22) Anmeldetag: 15.10.2018
(51) Int. Cl.: G01B 11/04, G01B 11/10, G01B 11/14, G01B 11/24, G01B 11/245, G01N 21/00, G05B 19/00, G05B 19/418

(54) **SYSTEM UND VERFAHREN ZUM PRÜFEN DER FORM EINES PRÜFOBJEKTS**
SYSTEM AND METHOD FOR TESTING THE SHAPE OF AN OBJECT TO BE TESTED
SYSTÈME ET PROCÉDÉ DE CONTRÔLE D'UNE FORME D'UN OBJET À CONTROLLER

(43) Veröffentlichungstag der Anmeldung: 22.04.2020
(73) Patentinhaber: FRAUNHOFER-GESELLSCHAFT zur Förderung der angewandten Forschung e.V., 80686 München (DE)
(72) Erfinder: ROJTBERG, Pavel, 64285 Darmstadt (DE); GORSCHLÜTER, Felix, 55128 Mainz (DE); BOCKHOLT, Ulrich, 55127 Mainz (DE); BERTZ, Alexander, 79194 Gundelfingen (DE); CARL, Daniel, 79312 Emmendingen (DE)
(74) Vertreter: WSL Patentanwälte Partnerschaft mbB

(56) Entgegenhaltungen:
- US-A1- 2013 202 195
- US-A1- 2018 005 365
- US-A1- 2018 017 380
- US-A1- 2018 178 255

## Beschreibung

Die vorliegende Erfindung betrifft ein System zum Prüfen der Form eines Prüfobjekts gemäß Anspruch 1 aufweisend:
- eine Objektprüfstrecke mit zumindest einem auf der Objektprüfstrecke angeordneten Objektprüfpunkt,
- eine Objektzufuhreinheit, die derart eingerichtet ist, dass sie das Prüfobjekt der Objektprüfstrecke zuführt, so dass sich in einem Betrieb des Systems das Prüfobjekt auf der Objektprüfstrecke bewegt,
- eine Objektbeleuchtungseinheit, die derart eingerichtet und angeordnet ist, dass sie in dem Betrieb des Systems das Prüfobjekt zumindest an dem Objektprüfpunkt mit elektromagnetischer Strahlung beleuchtet,
- eine Objekterfassungseinheit, die derart eingerichtet und angeordnet ist, dass sie in dem Betrieb des Systems das Prüfobjekt zumindest an dem Objektprüfpunkt aus einer Mehrzahl von Raumrichtungen erfasst und Prüfobjektdaten generiert, und
- eine computergestützte Auswerteeinheit, die derart wirksam mit der Objekterfassungseinheit verbunden ist, dass sie in dem Betrieb des Systems die Prüfobjektdaten von der Objekterfassungseinheit erhält, und die derart eingerichtet ist, dass sie die Prüfobjektdaten mit Referenzmodelldaten für das Prüfobjekt vergleicht und eine Abweichung zwischen den Prüfobjektdaten und den Referenzmodelldaten erfasst.

Die vorliegende Erfindung betrifft darüber hinaus ein Verfahren zum Prüfen der Form eines Prüfobjekts gemäß Anspruch 14.

Systeme zur Prüfung von Formen von Prüfobjekten werden bei verschiedenen Gelegenheiten eingesetzt. Mit Hilfe der Form eines Prüfobjekts können verschiedene Informationen gewonnen werden. So ist beispielsweise durch eine derartige Prüfung die Güte eines Produkts und/oder des Produktionsprozesses bestimmbar. In anderen Fällen ist anhand der Form die Echtheit eines Produkts verifizierbar. Weiter ist möglich, mittels der Form unterschiedliche Produkte zu kategorisieren.

Zur Prüfung von Formen von Prüfobjekten sind verschiedene Verfahren bekannt.

In der DE10051009A1 ist ein Verfahren zur Erkennung eines Prägebilds einer Münze in einem Münzautomaten beschrieben. Hierbei wird eine Münze relativ zu einem Bildempfänger und zu einer Lichtquelle bewegt. Die Lichtquelle weist zwei oder mehr Beleuchtungsabschnitte zur Beleuchtung eines Objektfeldes auf der Münzoberfläche aus jeweils einer anderen Richtung auf. Anschließend zeichnet der Bildempfänger mindestens zwei Aufnahmen des Objektfeldes auf. Das Objektfeld wird jeweils von einem der Beleuchtungsabschnitte aus einer anderen Richtung beleuchtet. Aus den Aufnahmen wird ein Differenzbild ermittelt. Mit Hilfe einer Daten- und Bildverarbeitung wird das ermittelte Differenzbild mit vorgegebenen Bilddaten verglichen und ein Echt- oder Falschsignal erzeugt.

Die WO2007/014782A1 offenbart eine Vorrichtung zum optischen Kontrollieren von Schüttgutteilchen mit einer Messanordnung. Diese Messanordnung verfügt über eine Mehrzahl von Kameras entsprechend der Anzahl der Seitenflächen eines Polyeders. Jede Kamera ist mit ihrer Sichtachse quer zu einer der Seitenflächen des Polyeders ausgerichtet und hat mindestens einen Punkt einer Flugbahn der Schüttgutteilchen in ihrem Sichtfeld. Des Weiteren verfügt die Vorrichtung über eine Einspeiseeinrichtung zum aufeinanderfolgenden Einspeisen von Schüttgutteilchen in die Flugbahn. Die Vorrichtung kann ferner eine Beleuchtungseinrichtung aufweisen, welche den beleuchteten Punkt beziehungsweise die Punkte mit einem strukturierten Lichtmuster, beispielsweise einem Gitternetz, beleuchtet.

In EP 2 511 653 B1 sind eine Vorrichtung und ein Verfahren zur Erfassung und anschließenden Rekonstruktion eines volumenbehafteten Objekts beschrieben. Diese Vorrichtung weist eine Gruppe von Bilderfassungssensoren zur Erfassung von Bildern des zu analysierenden volumenbehafteten Objekts auf. Diese Sensoren sind ausgelegt, simultan ein Bild des Objekts aufzunehmen. Ferner ist vorhanden eine Computeranlage zur Rekonstruktion des gesamten Volumens und Oberfläche des Objekts, basierend auf den Bildern, welche mittels der Bilderfassungssensoren erfasst wurden. Die Vorrichtung wird bereitgestellt mit einer Oberfläche, auf welcher Bilderfassungssensoren im Raum in einer sphärischen geometrischen Anordnung positioniert sind und deren optische Achsen im Wesentlichen in Richtung des Zentrums der Sphäre orientiert sind. Diese Oberfläche begrenzt in ihrem Inneren ein Volumen, welches das Objekt zwecks Analyse aufnimmt. Die Sensoren mit ihren optischen Achsen sind in Richtung des inneren Volumens der Oberfläche orientiert. Die Oberfläche weist zusätzlich eine Einlassöffnung und eine Auslassöffnung auf. Diese Öffnungen ermöglichen den Durchgang des zu analysierenden Objekts durch das Innere der Oberfläche in einer Bewegung des freien Falls.

In der US 2018/0178255 A1 wird eine Vorrichtung zur Erfassung eines Barcodes auf einem Objekt beschrieben, wobei die Vorrichtung ein inneres Volumen mit einer oberen und unteren Öffnung aufweist und eine Mehrzahl von Detektoren, um Daten von einem Objekt innerhalb des Volumens zwischen der oberen und unteren Öffnung zu erfassen, sodass eine automatisierte Erfassung eines Barcodes trotz verschiedener Orientierungen des Barcodes und Formen des Objektes relativ zu der Messvorrichtung ermöglicht wird.

Nachteilig an den vorbeschriebenen Lösungen ist, dass diese entweder keine Gegenüberstellung von Prüfobjekt und Vergleichsobjekt vorsehen oder eine derartige Lösung ist mit enormem Aufwand verbunden, was das Handling des Prüfobjekts betrifft.

Es ist Aufgabe der vorliegenden Erfindung, ein System zum Prüfen einer Form eines Prüfobjekts der eingangs genannten Art bereitzustellen, um Objekte zu prüfen, die in großen Stückzahlen und/oder in hohen Taktzeiten gefertigt werden, und das ohne aufwändiges Handling.

Erfindungsgemäß wird die Aufgabe dadurch gelöst, dass das System der eingangs genannten Art darüber hinaus eine Streueinheit mit einer Wandinnenfläche aufweist, wobei die Wandinnenfläche die Objektprüfstrecke teilkugelschalenförmig oder in Form einer Schale eines konvexen Polyeders umgibt mit zumindest einer Öffnung für das Prüfobjekt und wobei die Wandinnenfläche derart ausgestaltet ist, dass sie die elektromagnetische Strahlung diffus reflektiert oder streut, und die Objektbeleuchtungseinheit und die Streueinheit derart zueinander angeordnet sind, dass die elektromagnetische Strahlung das Prüfobjekt an dem Objektprüfpunkt aus allen von der Wandinnenfläche abgedeckten Raumrichtungen beleuchtet.

Die Objekterfassungseinheit weist mindestens eine Kamera auf. Eine Kamera ist bevorzugt als so genannte Flächenkamera ausgebildet. Sie erfasst aus ihrem jeweiligen Blickwinkel einen flächigen Abschnitt des Prüfobjekts mit nur einer Auslösung. Eine derartige Kamera weist einen flächigen Sensor auf. Ein solcher Sensor weist mehrere Pixel in x- und y-Richtung auf, die in einem äquidistanten Raster angeordnet sind.

Die Streueinheit ist in einer Ausführungsform mit einer hochstreuenden Lackierung, einem so genannten soft coating, auf der Wandinnenfläche ausgebildet, beispielsweise von NEXTEL®. In einer weiteren Ausführungsform ist die Streueinheit mittels einer rauen, matt-weißen Pulverbeschichtung gebildet.

Die Objektbeleuchtungseinheit ist bevorzugt mehrelementig aus mehreren Beleuchtungselementen aufgebaut. Ein Beleuchtungselement ist insbesondere durch zumindest eine LED gebildet.

Die vorliegende Erfindung basiert auf dem Grundgedanken, ein Prüfobjekt frei zugänglich und ohne aufwändiges Handling aus einer Vielzahl von Raumrichtungen zu prüfen. Freie Zugänglichkeit bedeutet, dass kein von der Objektbeleuchtungseinheit beleuchtbarer und von der Objekterfassungseinheit erfassbarer Bereich des Prüfobjekts durch eine Abschattung verdeckt ist und somit nicht prüfbar ist. Sowohl die freie Zugänglichkeit des Objekts wie auch die Vermeidung eines aufwändigen Handlings werden durch den freien Flug des Prüfobjekts erreicht.

Es hat sich überraschenderweise herausgestellt, dass die Qualität der Prüfobjektdaten von der Objekterfassungseinheit maßgeblich von der Ausleuchtung des Objekts mit Hilfe der Objektbeleuchtungseinheit abhängt. Erst die erfindungsgemäße Streueinheit ermöglicht eine homogene Ausleuchtung des Objekts aus einer Vielzahl von Raumrichtungen.

Eine Ausführungsform der Erfindung ist dadurch gekennzeichnet, dass die Objektzuführeinheit ein Fördermittel aufweist, wobei das Fördermittel derart eingerichtet und angeordnet ist, dass das Fördermittel in dem Betrieb des Systems das Prüfobjekt zu der Öffnung fördert, und wobei das Fördermittel ein Abwurfende aufweist, so dass das Prüfobjekt in dem Betrieb des Systems die Objektprüfstrecke entlangfliegt, wobei die Wandinnenfläche der Streueinheit die Objektprüfstrecke, vorzugsweise den Prüfpunkt, kugelschalenförmig oder in Form einer Schale eines konvexen Polyeders umgibt.

Bevorzugt weist das System eine Eintrittsöffnung und eine gegenüberliegende Austrittsöffnung auf. Zwischen Eintrittsöffnung und Austrittsöffnung ist zumindest abschnittsweise die Objektprüfstrecke angeordnet. In dem Betrieb des Systems fliegt das Prüfobjekt auf dieser Objektprüfstrecke.

Die Objektprüfstrecke beschreibt in einer Ausführungsform zumindest abschnittsweise eine Gerade, Parabel oder Teilkreisform. Dabei ist in einer Ausführungsform die Objektprüfstrecke zumindest abschnittsweise horizontal oder vertikal ausgerichtet.

Das Prüfobjekt ist beispielsweise ein eisengegossenes Halbzeug aus dem Automobilbereich. Hier ermöglicht das System in diesem Fall eine vollständige und automatisierte Visualkontrolle eines derartigen Bauteils.

Eine Ausführungsform der Erfindung ist dadurch gekennzeichnet, dass die Auswerteeinheit aufweist
- eine Objektlageidentifizierungseinheit, wobei die Objektlageidentifizierungseinheit derart ausgebildet ist, dass sie mittels der Prüfobjektdaten die räumliche Lage und Orientierung des Prüfobjekts identifiziert und daraus Objektlagedaten des Prüfobjekts generiert,
- einen Referenzmodellgenerator, der ein durch die Referenzmodelldaten repräsentiertes Referenzmodell generiert,
- eine Referenzmodelltransformationseinheit, welche die Referenzmodelldaten mit Hilfe der Objektlagedaten zu Vergleichsreferenzdaten transformiert, wobei die Referenzmodelltransformationseinheit das durch die Referenzmodelldaten repräsentierte Referenzmodell in die gleiche räumliche Lage und Orientierung wie das Prüfobjekt dreht und verschiebt und daraus zweidimensionale Vergleichsreferenzdaten generiert, und
- eine die Vergleichsreferenzdaten und Prüfobjektdaten vergleichende und Abweichungen zwischen diesen Daten feststellende Vergleichseinheit, wobei die Vergleichseinheit mit einer die Abweichungen zwischen Vergleichsreferenzdaten und Prüfobjektdaten bewertenden Klassifikationseinheit verbunden ist.

Im Rahmen dieser Erfindung bezeichnet das Wort "Lage" die Raumkoordinaten des Prüfobjekts und das Wort "Orientierung" die Rotation des Prüfobjekts. Beide Bestimmungsgrößen werden in Kombination auch als Pose bezeichnet, insbesondere in der Informatik.

Die Objektlageidentifizierungseinheit verarbeitet die Prüfobjektdaten aus den verschiedenen Raumrichtungen derart, dass anhand der Prüfobjektumrisse und der Kenntnis über die Positionierung und Ausrichtung der Kameras eine präzise Registrierung der Prüfobjektlage und -orientierung erfolgen kann. Diese Registrierung erfolgt in einer Ausführungsform in zwei aufeinanderfolgenden Schritten: eine Grobschätzung erkennt die Prüfobjektlage bis auf wenige Millimeter Versatz und die Orientierung bis auf einige Grad Verdrehung (bis zu 30°) genau, eine daran anschließende Feinregistrierung erfasst mittels eines konvergierenden Algorithmus die Prüfobjektlage und -orientierung weitestgehend exakt.

Der Referenzmodellgenerator erzeugt in einer Ausführungsform aus vorhandenen CAD-Daten und einer theoretischen Beschreibung der physikalischen Eigenschaften des Prüfobjekts (zum Beispiel hinsichtlich der Oberflächenstreueigenschaften) idealisierte, texturierte und mit zusätzlichen Metadaten ergänzte, mindestens dreidimensionale Referenzmodelldaten des Prüfobjekts. In einer anderen Ausführungsform werden anstelle vorhandener CAD-Daten Daten eines zusätzlichen 3D-Scansystems verwendet.

Die Vergleichseinheit verarbeitet die Vergleichsreferenzdaten und Prüfobjektdaten derart, dass Abweichungen im Umriss und in der Oberflächenstruktur erkennbar sind und markiert werden. Die anschließende Untersuchung durch die Klassifikationseinheit bewertet die markierten Abweichungen in einer Ausführungsform anhand zuvor festgelegter und in einer anderen Ausführungsform angelernter Prüfparameter (zum Beispiel zulässiger Toleranzen).

Eine Ausführungsform der Erfindung ist dadurch gekennzeichnet, dass die Objektprüfstrecke abschnittsweise eine Gerade, Parabel oder Teilkreisform beschreibt.
Dabei ist in einer Ausführungsform die Objektprüfstrecke zumindest abschnittsweise horizontal oder vertikal ausgerichtet.

Eine Ausführungsform der Erfindung ist dadurch gekennzeichnet, dass die Objektbeleuchtungseinheit und die Streueinheit derart ausgestaltet und angeordnet sind, dass eine Oberfläche des Prüfobjekts in dem Objektprüfpunkt mit einer über die Oberfläche weitestgehend homogenen, vorzugsweise aber homogenen, Intensität beleuchtbar ist. Dabei wird unter einer über die Oberfläche homogenen Intensität eine im Wesentlichen über die Oberfläche konstante Intensität verstanden.

Die Objektbeleuchtungseinheit weist bevorzugt mehrere Beleuchtungselemente auf. Ein Beleuchtungselement ist beispielsweise aus einer oder mehreren LEDs gebildet. In einer solchen Ausführungsform ist eine gleichmäßige Beleuchtung mittels indirekter Beleuchtung realisierbar, indem eine LED gegen eine helle, bevorzugt raue und weiße, Wandinnenfläche der Streueinheit strahlt. Eine LED ist ferner mit einem Diffusor ausstattbar.

In einer besonders vorteilhaften Ausführungsform werden LEDs sehr kurz blitzend, vorzugsweise mit einer Dauer von 10 Mikrosekunden oder weniger, und/oder mit hohen Strömen beaufschlagt betrieben. In einem Blitzbetrieb mit Blitzdauern von 10 Mikrosekunden oder weniger beträgt die Leistung ungefähr 100 Watt, in einigen Fällen 140 Watt. Ein Vorteil von LEDs ist deren Alterungsbeständ igkeit.

Eine Ausführungsform der Erfindung ist dadurch gekennzeichnet, dass der Objektprüfpunkt in dem Mittelpunkt der Streueinheit liegt. Ist die Wandinnenfläche der Streueinheit kugelschalenförmig, so ist der Mittelpunkt der Streueinheit der Mittelpunkt dieser Kugelschale. Bildet die Wandinnenfläche der Streueinheit eine Schale eines konvexen Polyeders, so ist der Mittelpunkt der Streueinheit der Mittelpunkt oder Symmetriepunkt dieser Schale.

Eine Ausführungsform der Erfindung ist dadurch gekennzeichnet, dass die Objekterfassungseinheit eine Mehrzahl von Kameras aufweist.

Die Anzahl der Kameras ist beispielsweise limitiert durch den Bauraum des Systems und die durch die Kameras generierte Datenmenge.

Bevorzugt weist das System so genannte Flächenkameras auf. Die Anzahl der Kameras beträgt bevorzugt 2 bis 50, weiter bevorzugt 10 bis 40 Kameras und höchst bevorzugt 20 bis 30 Kameras. Aus Symmetriegründen ist eine Anzahl von 24 Kameras bevorzugt.

Eine Ausführungsform der Erfindung ist dadurch gekennzeichnet, dass die Objekterfassungseinheit das Prüfobjekt entlang der Objektprüfstrecke kontinuierlich erfassend ausgebildet ist.

In dieser Ausführungsform werden die kontinuierlich erfassten Prüfobjektdaten an die computergestützte Auswerteeinheit übermittelt. Die computergestützte Auswerteeinheit entnimmt diesem Datensatz die Teildaten, in denen das Prüfobjekt in der passenden Lage und Orientierung vorliegt, und prozessiert diese weiter.

In einer anderen Ausführungsform werden die kontinuierlich erfassten Prüfobjektdaten an die computergestützte Auswerteeinheit übermittelt und durch diese in auswertbare Teildatenmengen segmentiert. Teildaten vor und nach dem Durchgang des Prüfobjektes durch den Objektprüfpunkt werden in die Feststellung der Prüfobjektlage und -orientierung miteinbezogen.

Eine Ausführungsform der Erfindung ist dadurch gekennzeichnet, dass die Objekterfassungseinheit das Prüfobjekt durch einen Trigger gesteuert erfassend ausgebildet ist.

In einer Ausführungsform wird die Anfangsgeschwindigkeit des Prüfobjektes durch zwei Lichtschranken an der Öffnung des Eintritts des Prüfobjekts in die Streueinheit bestimmt und der sich daraus ergebende, ideale Auslösezeitpunkt einer oder mehrerer Objekterfassungseinheiten ermittelt. Bei Erreichen dieses Zeitpunktes wird die Datenaufnahme der Objekterfassungseinheiten automatisiert durch einen elektrischen Impuls (Trigger) ausgelöst.

In einer anderen Ausführungsform ist eine Lichtschranke derart angeordnet, dass diese bei Durchgang des Prüfobjektes durch den Objektprüfpunkt ausgelöst wird. Damit verbunden wird die Datenaufnahme der Objekterfassungseinheiten automatisiert durch einen elektrischen Impuls (Trigger) ausgelöst.

Dabei ist in einer Ausführungsform die Objekterfassungseinheit derart ausgestaltet und eingerichtet, dass die Erfassung des Prüfobjekts auf der Objektprüfstrecke aus einer Mehrzahl von voneinander verschiedenen Raumrichtungen durch mehrere zeitlich nacheinander ausgelöste Trigger ausgelöst wird. Bevorzugt lösen dabei die einzelnen Trigger auch die jeweilige zu einer Raumrichtung der Erfassung gehörende Beleuchtung aus. Auf diese Weise lässt sich vermeiden, dass Beleuchtungselemente, welche nicht zur Beleuchtung des Prüfobjekts bei der Erfassung aus einer ausgewählten Raumrichtung benötigt werden, den jeweils messenden Sensor beleuchten. Auf diese Weise wird die Erfassung von parasitären Reflexionen und parasitärem Streulicht durch die Objekterfassungseinheit minimiert.

Zum Vermeiden parasitärer Reflexe erfolgt das Triggern nicht gleichzeitig, sondern mit einem geringen zeitlichen Abstand zwischen den Bildaufnahmen. Bevorzugt ist ein zeitlicher Bildaufnahmeabstand von 5 bis 100 Mikrosekunden, weiter bevorzugt ist ein zeitlicher Bildaufnahmeabstand von bis zu 50 Mikrosekunden, höchstbevorzugt ist ein zeitlicher Bildaufnahmeabstand von bis zu 10 Mikrosekunden.

Ferner ist bevorzugt, dass das einzelne Beleuchtungselement, welche sich im direkten Erfassungsbereich einer Kamera befindet, beim Auslösen dieser Kamera nicht auslöst. Dies vermeidet, dass direktes Licht in die jeweilige Kamera gelangt.

Eine Ausführungsform der Erfindung ist dadurch gekennzeichnet, dass die Objektzuführeinheit derart ausgebildet ist, dass sie der Objektprüfstrecke jeweils ein Prüfobjekt aus einer Mehrzahl von Prüfobjekten vereinzelt zuführt.

Bevorzugt erfolgt die Vereinzelung des Prüfobjekts:
- durch mechanische Begrenzung der Zuführung auf einem Förderband derart, dass immer nur ein Prüfobjekt durch eine Öffnung hindurchtritt und auf die Objektprüfstrecke gelangt. Diese Öffnung ist derart bemaßt, dass durch sie nur ein Prüfobjekt hindurchtreten kann. Dies ermöglicht eine weitere Bemaßungskontrolle der Prüfobjekte;
- durch Erfassung des Flusses der Prüfobjekte. Dies erfolgt insbesondere mittels einer Lichtschranke und einer aktiven Steuerung des Flusses der Prüfobjekte. Bevorzugt wird dies erreicht mittels eines Förderbandes und einer automatisierten Klappe. Diese ermöglicht die vereinzelte Zuführung der Prüfobjekte beispielsweise im Takt der Produktion der Prüfobjekte;
- durch vereinzelndes Greifen des Prüfobjekts und Zuführen zu der Objektprüfstrecke. Dieses Greifen erfolgt automatisiert durch einen Roboter oder durch einen Menschen. Diese Vereinzelungsmethode ermöglicht, das Prüfobjekt einer weiteren vorherigen visuellen Kontrolle, beispielsweise einer Augenscheinnahme, zu unterziehen; oder
- durch den Produktionstakt an sich, indem die Prüfobjekte kontinuierlich abtransportiert, einzeln gegriffen und/oder einzeln in Behälter, Ablagemulden verbracht werden. Hierbei ist die direkte in den Fertigungsprozess von Vorteil.

Die Vereinzelung der Prüfobjekte ermöglicht eine an die Prüfung anschließende Weiterbehandlung eines Prüfobjekts, beispielsweise durch Reparatur, Nachbesserung, Weiterverarbeitung. Es kann aber auch ein Ausschließen aus der weiteren Behandlung des Prüfobjekts erfolgen und/oder ein Vernichten des Prüfobjekts folgen.

Eine Ausführungsform der Erfindung ist dadurch gekennzeichnet, dass die Objektzuführeinheit derart ausgebildet ist, dass sie eine Mehrzahl von Prüfobjekten immer in gleicher Lage und Orientierung an die Objektprüfstrecke übergibt.

Durch die Übergabe der Prüfobjekte immer in gleicher Orientierung ist die Lage des einzelnen Prüfobjekts bekannt und muss bei ebenfalls fixer Lage des Referenzmodells nicht korrigiert werden. Dies ermöglicht einen Verzicht auf eine Lageerkennungseinheit und Lagekorrektureinheit.

Eine Ausführungsform der Erfindung ist dadurch gekennzeichnet, dass das System eine Objektauffangeinheit aufweist, wobei die Objektauffangeinheit ausgebildet ist, die kinetische Energie des Prüfobjekts zu verringern.

Das Prüfobjekt wird bevorzugt aktiv oder passiv abgebremst. Aktive Abbremsung erfolgt bevorzugt durch ein Fördermittel, welches das Prüfobjekt aufnimmt oder mittels eines Luftstroms. Bei passiver Abbremsung erfolgt mittels der Bewegungsenergie in vertikaler Richtung ein horizontaler Abtransport des Prüfobjekts ohne aktive Komponente. Bevorzugt erfolgt das passive Abbremsen mittels eines Umlenkbleches, das beispielsweise federnd aufgehängt ist. Die Verringerung der kinetischen Energie eines Prüfobjekts zieht zahlreiche Vorteile nach sich: ein Prüfobjekt wird weniger beschädigt, es wird schneller abtransportiert und ist besser zu allokieren (für weitere Schritte).

Erfindungsgemäß wird die Aufgabe ferner gelöst durch ein Verfahren zum Prüfen der Form eines Prüfobjekts aufweisend folgende Schritte:
- Beleuchten der Oberfläche des Prüfobjekts;
- Erfassen der beleuchteten Oberfläche des Prüfobjekts;
- Generieren von Prüfobjektdaten aus der erfassten Oberfläche des Prüfobjekts;
- Vergleichen der Prüfobjektdaten mit Referenzmodelldaten für das Prüfobjekt;
- Erfassen der Abweichungen zwischen den Prüfobjektdaten und den Referenzmodelldaten,
- wobei bei dem Beleuchten der Oberfläche des Prüfobjekts die elektromagnetische Strahlung an einer Wandinnenfläche einer Streueinheit diffus reflektiert oder gestreut wird,
- wobei die Wandinnenfläche die Objektprüfstrecke teilkugelschalenförmig oder in Form einer Schale eines konvexen Polyeders umgibt, und
wobei das Prüfobjekt entlang der Objektprüfstrecke fliegt.

Soweit zuvor Aspekte der Erfindung im Hinblick auf das System beschrieben werden, so gelten diese auch für das entsprechende Verfahren zum Prüfen der Form eines Prüfobjekts und umgekehrt. Soweit das Verfahren mit einem System gemäß dieser Erfindung ausgeführt wird, so weist dieses die entsprechenden Einrichtungen hierfür auf. Insbesondere sind Ausführungsformen des Systems zum Ausführen der hier beschriebenen Ausführungsformen des Verfahrens geeignet.

In einer Ausführungsform umfasst das erfindungsgemäße Verfahren zudem die folgenden Schritte:
Generieren von Objektlagedaten aus der räumliche Lage und Orientierung des Prüfobjekts aus den Prüfobjektdaten;
Generieren eines durch Referenzmodelldaten repräsentierten Referenzmodells;
Transformieren von Referenzmodelldaten mit Hilfe der Objektlagedaten zu Vergleichsreferenzdaten,
wobei das durch die Referenzmodelldaten repräsentierte Referenzmodell in die gleiche räumliche Lage und Orientierung wie das Prüfobjekt gedreht und verschoben wird und daraus zweidimensionale Vergleichsreferenzdaten generiert werden;
Vergleichen von Vergleichsreferenzdaten und Prüfobjektdaten; und
Klassifizieren der Abweichungen von Vergleichsreferenzdaten und Prüfobjektdaten.

Weitere Vorteile, Merkmale und Anwendungsmöglichkeiten der vorliegenden Erfindung werden anhand der folgenden Beschreibung einer Ausführungsform und der dazugehörigen Figuren deutlich.
Fig. 1 zeigt einen Schnitt durch eine schematische Darstellung eines Systems zum Prüfen der Form eines Prüfobjekts gemäß einer Ausführungsform der vorliegenden Erfindung.
Fig. 2 zeigt in vergrößerter Darstellung einen Ausschnitt aus der Streueinheit aus Fig. 1.
Fig. 3 zeigt einen Schnitt eines Ausschnitts aus der Streueinheit des Systems einer weiteren Ausführungsform.
Fig. 4 zeigt in schematischer Darstellung die Elemente einer Ausführungsform der computergestützten Auswerteeinheit einer Ausführungsform der Erfindung.

In den Figuren sind identische Elemente mit identischen Bezugszeichen bezeichnet.

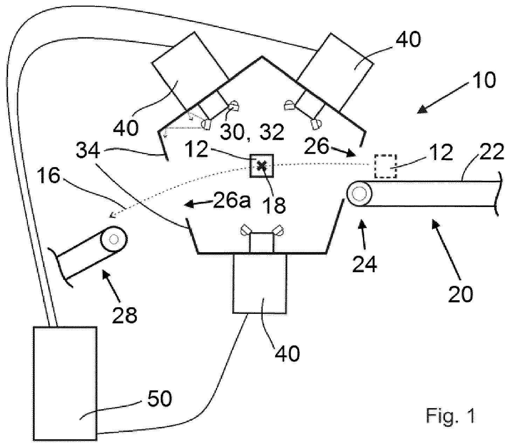

Figur 1 zeigt einen Schnitt durch eine schematische Darstellung eines Systems 10 zum Prüfen der Form eines Prüfobjekts 12 gemäß einer Ausführungsform der Erfindung. Das System 10 verfügt über eine Objektzuführeinheit 20 mit einem Fördermittel 22 und einem Abwurfende 24 an einem Ende des Fördermittels 22. Die gesamte Objektzuführeinheit 20 ist so angeordnet, dass das Abwurfende 24 vor einer Öffnung 26 einer Streueinheit 34 positioniert ist.

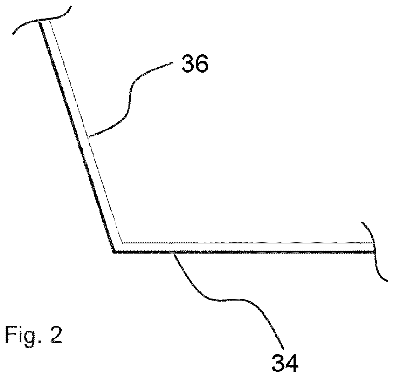

Herzstück des dargestellten Systems ist die Streueinheit 34 mit einer in Figur 2 dargestellten Wandinnenfläche 36. Durch diese Streueinheit 34 verläuft eine gestaucht parabelförmige Objektprüfstrecke 16 mit einem Objektprüfpunkt 18. Die Form der Objektsprüfstrecke 16 ist unter anderem abhängig von Geschwindigkeit, mit der das Prüfobjekt 12 das Fördermittel 22 am Abwurfende 24 verlässt. Der Objektprüfpunkt 18 befindet sich im Mittelpunkt der Streueinheit 34. Die in Figur 2 dargestellte Wandinnenfläche 36 umgibt die Objektprüfstrecke 16 in Form eines konvexen Polyeders. Am Objektprüfpunkt 18 beleuchtet eine Objektbeleuchtungseinheit 30 das Prüfobjekt 12.

In der dargestellten Ausführungsform ist die Objektbeleuchtungseinheit 30 in der Streueinheit 34 angeordnet und ist aus sechs Beleuchtungselementen 32 gebildet. Jedes Beleuchtungselement 32 ist aus einer pulsbaren LED mit einer Leistung von ungefähr 100W gebildet und in Richtung der Wandinnenfläche 36 gerichtet. Von dieser in Figur 2 dargestellten Wandinnenfläche 36 wird die von jedem Beleuchtungselement 32 emittierte Strahlung in Richtung des Objektprüfpunkts 18 diffus streuend reflektiert. Dies wird einerseits erreicht durch die Form der Wandinnenfläche 36, also deren konvex-polyedrischen Form, und andererseits deren Lackierung. Die Lackierung ist eine hochstreuende Lackierung, ein so genanntes soft coating, beispielsweise von NEXTEL®. Lackierung und Form der in Figur 2 dargestellten Wandinnenfläche 36 bewirken eine homogene Beleuchtung aller Seiten des Prüfobjekts 12. Des Weiteren weist die dargestellte Ausführungsform eine Objekterfassungseinheit 40 auf. Die Objekterfassungseinheit 40 ist hier aus drei Flächenkameras gebildet. Jede Flächenkamera verfügt über einen flächigen Sensor mit mehreren Pixeln in x- und y-Richtung. Jede dieser Kameras ist auf den Objektprüfpunkt 12 gerichtet und erfasst aus ihrem jeweiligen Blickwinkel das gesamte Objekt mit nur einer Auslösung. Die Objekterfassungseinheit 40 ist verbunden mit einer computergestützten Auswerteinheit 50, welche die übergebenen Daten verarbeitet.

In der Streueinheit 34 der dargestellten Ausführungsform ist eine weitere, der Öffnung 26 gegenüberliegende, Öffnung 26a angeordnet. Durch diese Öffnung 26a verläuft der weitere Verlauf der Objektprüfstrecke 16. Nach Verlassen der Objektprüfstrecke 16 wird das Prüfobjekt 12 von einer hier schematisch dargestellten Objektauffangeinheit 28 aufgenommen.

Die Prüfung der Form des Prüfobjekts 12 erfolgt wie nachfolgend beschrieben: Auf dem als Förderband ausgebildeten Fördermittel 22 wird das Prüfobjekt 12 bis zu dem Abwurfende 24 befördert. Am Abwurfende 24 wird das Prüfobjekt 12 der gestaucht parabelförmigen Objektprüfstrecke 16 übergeben. Entlang der Objektprüfstrecke 16 fliegt das Prüfobjekt 12 bis es den Objektprüfpunkt 18 im Mittelpunkt der Streueinheit 34 passiert. Im Mittelpunkt der Streueinheit 34 ist eine gleichmäßige Beleuchtung des Prüfobjekts 12 am besten gewährleistet. Am Objektprüfpunkt 18 wird das Prüfobjekt 12 durch einen kurzen Lichtpuls der sechs jeweils als LED ausgebildeten Beleuchtungselemente 32 der Objektbeleuchtungseinheit 30 gleichzeitig und homogen von allen Seiten beleuchtet. Ein derartiger Lichtpuls beträgt ungefähr 10 Mikrosekunden. Synchronisiert zu diesem Lichtpuls lösen die drei dargestellten Flächenkameras der Objekterfassungseinheit 40 aus und erfassen alle Seiten des Prüfobjekts 12 gleichzeitig, d.h. ohne dass Bereiche des Prüfobjekts 12 durch Abschattungen verdeckt sind. Darüber hinaus zeichnet eine hier nicht dargestellte Lageerkennungseinheit die Orientierung des Prüfobjekts 12 im Raum am Objektprüfpunkt 18 auf. Die Synchronisation von Objektbeleuchtungseinheit 30 und Objekterfassungseinheit 40 erfolgt durch einen hier nicht weiter dargestellten Trigger. Beim Erfassen des Prüfobjekts 12 generiert die Objekterfassungseinheit 40 Prüfobjektdaten 62 und übergibt diese Daten an die computergestützte Auswerteeinheit 50. Diese Prüfobjektdaten 62 werden in der computergestützten Auswerteeinheit 50 mit Referenzmodelldaten 72 für das Prüfobjekt 12 verglichen. Hierbei werden die Abweichungen zwischen den Prüfobjektdaten 62 und den Referenzmodelldaten 72 erfasst. Nach dieser Erfassung folgt das Prüfobjekt 12 dem weiteren Verlauf der Objektprüfstrecke 16 bis es durch die Öffnung 26a die Streueinheit 34 verlässt und von der als Förderband ausgebildeten Objektauffangeinheit 28 aufgenommen wird. Das Förderband nimmt die kinetische Energie des Prüfobjekts 12 sanft auf, sodass es wenig oder gar nicht beschädigt wird. Alternativ bildet ein Umlenkblech die Objektauffangeinheit 26.

Figur 2 zeigt einen Ausschnitt aus der Streueinheit des Systems aus Figur 1. Dabei ist der in Figur 1 links unten gezeigte Teil der Streueinheit 34 hier in vergrößerter Darstellung wiedergegeben. Auf die Streueinheit 34 ist die Wandinnenseite 36 in Form einer Lackierung aufgebracht.

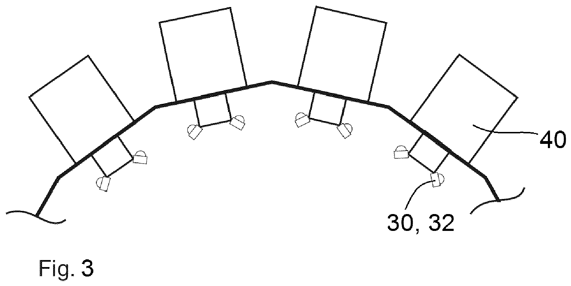

Figur 3 zeigt einen Schnitt eines Ausschnitts aus der Streueinheit des Systems einer weiteren Ausführungsform. Bei der Darstellung dieser Ausführungsform sind die Streueinheit 34 und die Wandinnenfläche 36 nicht mehr differenziert voneinander dargestellt. Hier weist die polyedrische Wandinnenfläche 36 eine größere Anzahl von Flächen auf als in der in Figur 1 dargestellten Ausführungsform. Bei diesem Ausschnitt sind acht Beleuchtungselemente 32 und vier Objekterfassungseinheiten 40 dargestellt.

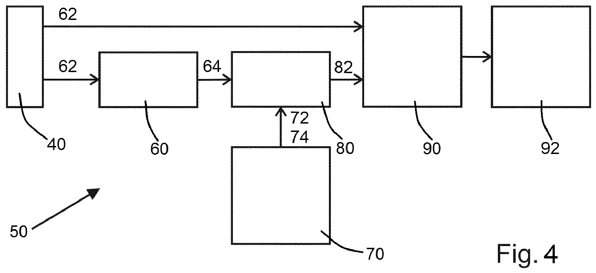

Figur 4 zeigt die Bestandteile und den Ablauf in der computergestützten Auswerteeinheit 50 einer Ausführungsform der Erfindung. Die computergestützte Auswerteeinheit 50 ist aufgebaut aus einer Objektlageidentifizierungs-einheit 60, einem Referenzmodellgenerator 70, einer Referenzmodelltransformationseinheit 80 sowie einer Vergleichseinheit 90.

Von der Objektdatenerfassungseinheit 40 erhält die Objektlageidentifizierungseinheit 60 Prüfobjektdaten 62 aus der Erfassung des Prüfobjekts 12 am Objektprüfpunkt 18. Die Objektlageidentifizierungseinheit 60 verarbeitet diese Prüfobjektdaten 62 aus den verschiedenen Raumrichtungen derart, dass anhand der Umrisse des Prüfobjekts 12 und der Kenntnis über Positionierung und Ausrichtung der Kameras eine präzise Registrierung der Lage und Orientierung des Prüfobjekts 12 erfolgt. Diese Registrierung erfolgt in einer Grobschätzung und einer Feinregistrierung. Die Grobschätzung erkennt die Lage des Prüfobjekts 12 bis auf einen Versatz von wenigen Millimetern und die räumliche Orientierung bis auf eine Verdrehung um wenige Grad (bis zu 30°). Die sich daran anschließende Feinregistrierung erfasst mittels eines konvergierenden Algorithmus die Lage und Orientierung des Prüfobjekts 12 weitestgehend exakt und generiert daraus Objektlagedaten 64.

Der Referenzmodellgenerator 70 erzeugt dreidimensionale Referenzmodelldaten 72 des Prüfobjekts 12. Hierzu werden aus vorhandenen CAD-Daten des Referenzmodells 74 und einer theoretischen Beschreibung der physikalischen Eigenschaften des Prüfobjekts 12 idealisierte, texturierte und mit zusätzlichen Metadaten ergänzte, mindestens dreidimensionale Referenzmodelldaten 72 des Prüfobjekts 12 generiert.

Die Referenzmodelltransformationseinheit 80 dreht und verschiebt das durch die Referenzmodelldaten 72 repräsentierte Referenzmodell 74 in die gleiche räumliche Lage und Orientierung wie das Prüfobjekt 12 und transformiert damit die Referenzmodelldaten 72 mit Hilfe der Objektlagedaten 64 zu Vergleichsreferenzdaten 82.

Die Vergleichseinheit 90 erkennt Abweichungen im Umriss und in der Oberflächenstruktur zwischen Vergleichsreferenzdaten 82 und Prüfobjektdaten 62 und markiert diese Abweichungen. Anschließend untersucht und bewertet die Klassifikationseinheit 92 die zuvor markierten Abweichungen zwischen Vergleichsreferenzdaten 82 und Prüfobjektdaten 62 anhand zuvor festgelegter und/oder angelernter Prüfparameter.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammen-stellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 10: System
- 12: Prüfobjekt
- 16: Objektprüfstrecke
- 18: Objektprüfpunkt
- 20: Objektzufuhreinheit
- 22: Fördermittel
- 24: Abwurfende
- 26, 26a: Öffnung
- 28: Objektauffangeinheit
- 30: Objektbeleuchtungseinheit
- 32: Beleuchtungselement
- 34: Streueinheit
- 36: Wandinnenfläche

- 40: Objekterfassungseinheit
- 50: computergestützte Auswerteeinheit
- 60: Objektlageidentifizierungseinheit
- 62: Prüfobjektdaten
- 64: Objektlagedaten
- 70: Referenzmodellgenerator
- 72: Referenzmodelldaten
- 74: Referenzmodell
- 80: Referenzmodelltransformationseinheit
- 82: Vergleichsreferenzdaten
- 90: Vergleichseinheit
- 92: Klassifikationseinheit

## Patentansprüche

1. System (10) zum Prüfen der Form eines Prüfobjekts (12) aufweisend
eine Objektprüfstrecke (16) mit zumindest einem auf der Objektprüfstrecke (16) angeordneten Objektprüfpunkt (18),
eine Objektzufuhreinheit (20),
die derart eingerichtet ist, dass sie das Prüfobjekt (12) der Objektprüfstrecke (16) zuführt, so dass sich in einem Betrieb des Systems (10) das Prüfobjekt (12) auf der Objektprüfstrecke (16) bewegt,
eine Objektbeleuchtungseinheit (30) mit zumindest einem Beleuchtungselement (32),
die derart eingerichtet und angeordnet ist, dass sie in dem Betrieb des Systems (10) das Prüfobjekt (12) zumindest an dem Objektprüfpunkt (18) mit elektromagnetischer Strahlung beleuchtet,
eine Objekterfassungseinheit (40),
die derart eingerichtet und angeordnet ist, dass sie in dem Betrieb des Systems (10) das Prüfobjekt (12) zumindest an dem Objektprüfpunkt (18) aus einer Mehrzahl von Raumrichtungen erfasst und Prüfobjektdaten (62) generiert, und
eine computergestützte Auswerteeinheit (50),
die derart wirksam mit der Objekterfassungseinheit (40) verbunden ist, dass sie in dem Betrieb des Systems (10) die Prüfobjektdaten (62) von der Objekterfassungseinheit (40) erhält, und
die derart eingerichtet ist, dass sie die Prüfobjektdaten (62) mit Referenzmodelldaten (72) für das Prüfobjekt (12) vergleicht und eine Abweichung zwischen den Prüfobjektdaten (62) und den Referenzmodelldaten (72) erfasst,
**dadurch gekennzeichnet, dass**
das System (10) darüber hinaus eine Streueinheit (34) mit einer Wandinnenfläche (36) aufweist,
wobei die Wandinnenfläche (36) die Objektprüfstrecke (16) teilkugelschalenförmig oder in Form einer Schale eines konvexen Polyeders umgibt mit zumindest einer Öffnung (26) für das Prüfobjekt (12) und
wobei die Wandinnenfläche (36) derart ausgestaltet ist, dass sie die elektromagnetische Strahlung diffus reflektiert oder streut, und
die Objektbeleuchtungseinheit (30) und die Streueinheit (34) derart zueinander angeordnet sind, dass die elektromagnetische Strahlung das Prüfobjekt (12) an dem Objektprüfpunkt (18) aus allen von der Wandinnenfläche (36) abgedeckten Raumrichtungen beleuchtet.

2. System nach Anspruch 1, **dadurch gekennzeichnet, dass** die Objektzuführeinheit (20) ein Fördermittel (22) aufweist, wobei das Fördermittel (22) derart eingerichtet und angeordnet ist, dass das Fördermittel (22) in dem Betrieb des Systems (10) das Prüfobjekt (12) zu der Öffnung (26) fördert, und wobei das Fördermittel (22) ein Abwurfende (24) aufweist, so dass das Prüfobjekt (12) in dem Betrieb des Systems die Objektprüfstrecke (16) entlangfliegt, wobei die Wandinnenfläche (36) der Streueinheit (34) die Objektprüfstrecke (16) in Form einer Schale eines konvexen Polyeders oder kugelschalenförmig umgibt.

3. System (10) nach einem der vorhergehenden Ansprüche, **dadurch gekennzeichnet, dass** die computergestützte Auswerteeinheit (50) aufweist
eine Objektlageidentifizierungseinheit (60),
wobei die Objektlageidentifizierungseinheit (60) derart ausgebildet ist, dass sie mittels der Prüfobjektdaten (62) die räumliche Lage und Orientierung des Prüfobjekts (12) identifiziert und daraus Objektlagedaten (64) des Prüfobjekts (12) generiert,
einen Referenzmodellgenerator (70),
der ein durch die Referenzmodelldaten (72) repräsentiertes Referenzmodell (74) generiert,
eine Referenzmodelltransformationseinheit (80),
welche die Referenzmodelldaten (72) mit Hilfe der Objektlagedaten (64) zu Vergleichsreferenzdaten (82) transformiert,
wobei die Referenzmodelltransformationseinheit (80) das durch die Referenzmodelldaten (72) repräsentierte Referenzmodell (74) in die gleiche räumliche Lage und Orientierung wie das Prüfobjekt (12) dreht und verschiebt und daraus zweidimensionale Vergleichsreferenzdaten (82) generiert, und
eine die Vergleichsreferenzdaten (82) und Prüfobjektdaten (62) vergleichende und Abweichungen zwischen diesen Daten feststellende Vergleichseinheit (90),
wobei die Vergleichseinheit (90) mit einer die Abweichungen zwischen Vergleichsreferenzdaten (92) und Prüfobjektdaten (62) bewertenden Klassifikationseinheit (92) verbunden ist.

4. System nach einem der Ansprüche 1 bis 3, **dadurch gekennzeichnet, dass** die Objektprüfstrecke (16) abschnittsweise eine Gerade, Parabel oder Teilkreisform beschreibt.

5. System nach einem der Ansprüche 1 bis 4, **dadurch gekennzeichnet, dass** die Objektbeleuchtungseinheit (30) und die Streueinheit (34) derart ausgestaltet und angeordnet sind, dass eine Oberfläche des Prüfobjekts (12) in dem Objektprüfpunkt (18) mit einer über die Oberfläche des Prüfobjekts (12) konstanten Intensität beleuchtbar ist.

6. System nach einem der Ansprüche 1 bis 5 **dadurch gekennzeichnet, dass** der Objektprüfpunkt (18) in dem Mittelpunkt der Streueinheit (34) liegt.

7. System nach einem der Ansprüche 1 bis 6, **dadurch gekennzeichnet, dass** die Objekterfassungseinheit (40) eine Mehrzahl von Kameras aufweist.

8. System nach einem der Ansprüche 1 bis 7, **dadurch gekennzeichnet, dass** die Objekterfassungseinheit (40) das Prüfobjekt (12) entlang der Objektprüfstrecke (16) kontinuierlich erfassend ausgebildet ist.

9. System nach einem der Ansprüche 1 bis 8, **dadurch gekennzeichnet, dass** die Objekterfassungseinheit (40) das Prüfobjekt (12) durch einen Trigger gesteuert erfassend ausgebildet ist.

10. System nach Anspruch 9, **dadurch gekennzeichnet, dass** die Objekterfassungseinheit (40) das Prüfobjekt (12) auf der Objektprüfstrecke (16) durch mehrere zeitlich nacheinander ausgelöste Trigger erfassend ausgebildet ist, bevorzugt die einzelnen Trigger mit einzelnen Beleuchtungselementen (32) synchronisiert, so dass die Erfassung von parasitären Reflexionen und parasitärem Streulicht durch die Objekterfassungseinheit (40) minimiert wird.

11. System nach einem der Ansprüche 1 bis 10, **dadurch gekennzeichnet, dass** die Objektzuführeinheit (20) derart ausgebildet ist, dass sie der Objektprüfstrecke (16) jeweils ein Prüfobjekt (12) aus einer Mehrzahl von Prüfobjekten (12) vereinzelt zuführt.

12. System nach einem der Ansprüche 1 bis 11, **dadurch gekennzeichnet, dass** die Objektzuführeinheit (20) derart ausgebildet ist, dass sie eine Mehrzahl von Prüfobjekten (12) immer in gleicher Lage und Orientierung an die Objektprüfstrecke (16) übergibt.

13. System nach einem der Ansprüche 1 bis 12, **dadurch gekennzeichnet, dass** System eine Objektauffangeinheit (26) aufweist, wobei die Objektauffangeinheit (26) ausgebildet ist, die kinetische Energie der Prüfobjekts (12) zu verringern.

14. Verfahren zum Prüfen der Form eines Prüfobjekts (12) aufweisend folgende Schritte:
Beleuchten der Oberfläche des Prüfobjekts (12);
Erfassen der beleuchteten Oberfläche des Prüfobjekts (12);
Generieren von Prüfobjektdaten (62) aus der erfassten Oberfläche des Prüfobjekts (12);
Vergleichen der Prüfobjektdaten (62) mit Referenzmodelldaten (72) für das Prüfobjekt (12);
Erfassen der Abweichungen zwischen den Prüfobjektdaten (62) und den Referenzmodelldaten (72), wobei das Prüfobjekt (12) entlang der Objektprüfstrecke (16) fliegt
**dadurch gekennzeichnet, dass**
bei dem Beleuchten der Oberfläche des Prüfobjekts (12) die elektromagnetische Strahlung an einer Wandinnenfläche (36) einer Streueinheit (34) diffus reflektiert oder gestreut wird, wobei die Wandinnenfläche (36) die Objektprüfstrecke (16) teilkugelschalenförmig oder in Form einer Schale eines konvexen Polyeders umgibt.

15. Verfahren nach Anspruch 14 **gekennzeichnet durch**
Generieren von Objektlagedaten (64) aus der räumliche Lage und Orientierung des Prüfobjekts (12) aus den Prüfobjektdaten (62);
Generieren eines durch Referenzmodelldaten (72) repräsentiertes Referenzmodell (74);
Transformieren von Referenzmodelldaten (72) mit Hilfe der Objektlagedaten (64) zu Vergleichsreferenzdaten (82),
wobei das durch die Referenzmodelldaten (72) repräsentierte Referenzmodell (74) in die gleiche räumliche Lage und Orientierung wie das Prüfobjekt (12) gedreht und verschoben wird und daraus zweidimensionale Vergleichsreferenzdaten (82) generiert werden;
Vergleichen von Vergleichsreferenzdaten (82) und Prüfobjektdaten (62); Klassifizieren der Abweichungen von Vergleichsreferenzdaten (82) und Prüfobjektdaten (62).

## Claims

1. A system (10) for testing the shape of a test object (12) having
an object test path (16) having at least one object test point (18) arranged on the object test path (16),
an object feed unit (20)
which is so adapted that it feeds the test object (12) to the object test path (16) so that in an operation of the system (10) the test object (12) moves on the object test path,
an object illumination unit (30) having at least one illumination element (32)
which is so adapted and arranged that in operation of the system (10) it illuminates the test object (12) at least at the object test point (18) with electromagnetic radiation,
an object detection unit (40)
which is so adapted and arranged that in operation of the system (10) it detects the test object (12) at least at the object test point (18) from a plurality of spatial directions and generates test object data (62), and
a computer-aided evaluation unit (50)
which is operatively connected to the object detection unit (40) in such a way that in operation of the system (10) it receives the test object data (62) from the object detection unit (40), and
which is so adapted that it compares the object test data (62) to reference model data (72) for the test object (12) and detects a deviation between the test object data (62) and the reference model data (72),
**characterised in that**
the system (10) further has a scattering unit (34) having a wall inner surface (36),
wherein the wall inner surface (36) surrounds the test object path (16) in the shape of a part-spherical shell or in the form of a shell of a convex polyhedron with at least one opening (26) for the test object (12), and
wherein the wall inner surface (36) is of such a configuration that it diffusely reflects or scatters the electromagnetic radiation, and
the object illumination unit (30) and the scattering unit (34) are so arranged relative to each other that the electromagnetic radiation illuminates the test object (12) at the object test point (18) from all spatial directions covered by the wall inner surface (36).

2. A system according to claim 1 **characterised in that** the object feed unit (20) has a conveyor means (22), wherein the conveyor means (22) is so adapted and arranged that in operation of the system (10) the conveyor means (22) conveys the test object (12) to the opening (26) and wherein the conveyor means (22) has a discharge end (24) so that the test object (12) in operation of the system flies along the object test path (16), wherein the wall inner surface (36) of the scattering unit (34) surrounds the object test path (16) in the form of a shell of a convex polyhedron or in the form of a spherical shell.

3. A system (10) according to one of the preceding claims **characterised in that** the computer-aided evaluation unit (50) has
an object position identification unit (60),
wherein the object position identification unit (60) is so designed that by means of the test object data (62) it identifies the spatial position and orientation of the test object (12) and generates therefrom object position data (64) of the test object (12),
a reference model generator (70)
which generates a reference model (74) represented by the reference model data (72),
a reference model transformation unit (80)
which transforms the reference model data (72) by means of the object position data (64) into comparison reference data (82),
wherein the reference model transformation unit (80) rotates and displaces the reference model (74) represented by the reference model data (72) into the same spatial position and orientation as the test object (12) and generates therefrom two-dimensional comparison reference data (82), and
a comparison unit (90) which compares the comparison reference data (82) and the test object data (62) and ascertains deviations between said data,
wherein the comparison unit (90) is connected to a classification unit (92) evaluating the deviations between the comparison reference data (92) and the test object data (62).

4. A system according to one of claims 1 to 3 **characterised in that** the object test path (16) portion-wise describes a straight line, a parabola or a part-circle shape.

5. A system according to one of claims 1 to 4 **characterised in that** the object illumination unit (30) and the scattering unit (34) are so adapted and arranged that a surface of the test object (12) in the object test point (18) can be illuminated with an intensity which is constant over the surface of the test object (12).

6. A system according to one of claims 1 to 5 **characterised in that** the object test point (18) is in the centre point of the scattering unit (34).

7. A system according to one of claims 1 to 6 **characterised in that** the object detection unit (40) has a plurality of cameras.

8. A system according to one of claims 1 to 7 **characterised in that** the object detection unit (40) is adapted to continuously detect the test object (12) along the object test path (16).

9. A system according to one of claims 1 to 8 **characterised in that** the object test unit (40) is adapted to detect the test object (12) controlled by a trigger.

10. A system according to claim 9 **characterised in that** the object detection unit (40) is adapted to detect the test object (12) on the object test path (16) by a plurality of triggers which are triggered in time succession, preferably the individual triggers being synchronized with individual illumination systems (32), so that the detection of parasitic reflections and parasitic stray light by the object detection unit (40) is minimised.

11. A system according to one of claims 1 to 10 **characterised in that** the object feed unit (20) is so adapted that it individually feeds a respective test object (12) from a plurality of test objects (12) to the object test path (16).

12. A system according to one of claims 1 to 11 **characterised in that** the object feed unit (20) is so adapted that it transfers a plurality of test objects (12) to the test object path (16) always in the same position and orientation.

13. A system according to one of claims 1 to 12 **characterised in that** the system has an object catch unit (26), wherein the object catch unit (26) is adapted to reduce the kinetic energy of the test object (12).

14. A method of testing the shape of a test object (12) comprising the following steps:
illuminating the surface of the test object (12);
detecting the illuminated surface of the test object (12);
generating test object data (62) from the detected surface of the test object (12);
comparing the test object data (62) to reference model data (72) for the test object (12); and
detecting the deviations between the test object data (62) and the reference model data (72), wherein the test object (12) flies along the object test path (16),
**characterised in that**
in the illumination of the surface of the test object (12) the electromagnetic radiation is diffusely reflected or scattered at a wall inner surface (36) of a scattering unit (34), wherein the wall inner surface (36) surrounds the object test path (16) in the shape of a part-spherical shell or in the form of a shell of a convex polyhedron.

15. A method according to claim 14 **characterised by**
generating object position data (64) from the spatial position and orientation of the test object (12) from the test object data (62);
generating a reference model (74) represented by reference model data (72);
transforming reference model data (72) by means of the object position data (64) into comparison reference data (82),
wherein the reference model (74) represented by the reference model data (72) is rotated and displaced into the same spatial position and orientation as the test object (12) and two-dimensional comparison reference data (82) are generated therefrom;
comparing comparison reference data (82) and test object data (62); and
classifying the deviations of comparison reference data (82) and test object data (62).

## Revendications

1. Système (10) de contrôle de la forme d'un objet à contrôler (12) comprenant
une section de contrôle d'objet (16) comportant au moins un point de contrôle d'objet (18) agencé sur la section de contrôle d'objet (16),
une unité d'alimentation en objet (20), qui est configurée de manière à amener l'objet à contrôler (12) à la section de contrôle d'objet (16) de telle sorte que lorsque le système (10) est en fonctionnement, l'objet à contrôler (12) se déplace sur la section de contrôle d'objet (16),
une unité d'éclairage d'objet (30) comportant au moins un élément d'éclairage (32), qui est configurée et agencée de manière à éclairer l'objet à contrôler (12) avec un rayonnement électromagnétique au moins au niveau du point de contrôle d'objet (18) pendant le fonctionnement du système (10), une unité de détection d'objet (40), qui est configurée et agencée de telle sorte que pendant le fonctionnement du système (10), elle détecte l'objet à contrôler (12) au moins au niveau du point de contrôle d'objet (18) à partir d'une pluralité de directions spatiales et génère des données d'objet à contrôler (62), et
une unité d'évaluation assistée par ordinateur (50), qui est connectée fonctionnellement à l'unité de détection d'objet (40) de telle sorte qu'elle reçoit les données d'objet à contrôler (62) depuis l'unité de détection d'objet (40) pendant le fonctionnement du système (10), et
qui est configurée de manière à comparer les données d'objet à contrôler (62) avec des données de modèle de référence (72) pour l'objet à contrôler (12) et à détecter une différence entre les données d'objet à contrôler (62) et les données de modèle de référence (72),
**caractérisé en ce que**
le système (10) possède également une unité de diffusion (34) comportant une surface de paroi intérieure (36),
dans lequel la surface de paroi intérieure (36) entoure la section d'objet à contrôler (16) sous la forme d'une coque partiellement sphérique ou sous la forme d'une coque d'un polyèdre convexe et comporte au moins une ouverture (26) pour l'objet à contrôler (12) et
dans lequel la surface de paroi intérieure (36) est conçue de telle sorte qu'elle réfléchit ou diffuse de manière diffuse le rayonnement électromagnétique, et l'unité d'éclairage d'objet (30) et l'unité de diffusion (34) sont agencées l'une par rapport à l'autre de telle manière que le rayonnement électromagnétique éclaire l'objet à contrôler (12) au niveau du point de contrôle d'objet (18) depuis toutes les directions spatiales couvertes par la surface de la paroi intérieure (36).

2. Système selon la revendication 1, **caractérisé en ce que** l'unité d'alimentation en objet (20) possède un moyen de transport (22), dans lequel le moyen de transport (22) est installé et agencé de telle sorte que le moyen de transport (22), pendant le fonctionnement du système (10), transporte l'objet à contrôler (12) vers l'ouverture (26), et dans lequel le moyen de transport (22) présente une extrémité de décharge (24), de sorte que l'objet à contrôler (12) se déplace le long de la section de contrôle d'objet (16) pendant le fonctionnement du système, la surface de paroi intérieure (36) de l'unité de diffusion (34) entourant la section de contrôle d'objet (16) sous la forme d'une coque d'un polyèdre convexe ou sous la forme d'une coque sphérique.

3. Système (10) selon l'une des revendications précédentes, **caractérisé en ce que** l'unité d'évaluation assistée par ordinateur (50) présente une unité d'identification de position d'objet (60),
l'unité d'identification de position d'objet (60) étant conçue de telle sorte qu'au moyen des données d'objet à contrôler (62), elle identifie la position et l'orientation spatiales de l'objet à contrôler (12) et génère à partir de celles-ci des données de position d'objet (64) de l'objet à contrôler (12),
un générateur de modèle de référence (70),
qui génère un modèle de référence (74) représenté par les données de modèle de référence (72),
une unité de transformation de modèle de référence (80), qui transforme les données de modèle de référence (72) à l'aide des données de position d'objet (64) en données de référence de comparaison (82),
l'unité de transformation de modèle de référence (80) faisant pivoter et déplaçant le modèle de référence (74) représenté par les données de modèle de référence (72) dans les mêmes position et orientation spatiales que l'objet à contrôler (12) et générant alors des données de référence de comparaison bidimensionnelles (82), et
une unité de comparaison (90) comparant les données de référence de comparaison (82) et les données d'objet à contrôler (62) et déterminant les écarts entre ces données,
l'unité de comparaison (90) étant connectée à une unité de classification (92) qui évalue les écarts entre les données de référence de comparaison (92) et les données d'objet à contrôler (62).

4. Système selon l'une des revendications 1 à 3, **caractérisé en ce que** la section d'objet à contrôler (16) décrit par segments une ligne droite, une parabole ou un arc de cercle.

5. Système selon l'une des revendications 1 à 4, **caractérisé en ce que** l'unité d'éclairage d'objet (30) et l'unité de diffusion (34) sont conçues et agencées de telle sorte qu'une surface de l'objet à contrôler (12), dans le point de contrôle d'objet (18), peut être éclairée avec une intensité constante sur la surface de l'objet à contrôler (12).

6. Système selon l'une des revendications 1 à 5, **caractérisé en ce que** le point de contrôle d'objet (18) se trouve au centre de l'unité de diffusion (34).

7. Système selon l'une des revendications 1 à 6, **caractérisé en ce que** l'unité de détection d'objet (40) présente plusieurs caméras.

8. Système selon l'une des revendications 1 à 7, **caractérisé en ce que** l'unité de détection d'objet (40) est conçue pour détecter en continu l'objet à contrôler (12) le long de la section de contrôle d'objet (16).

9. Système selon l'une des revendications 1 à 8, **caractérisé en ce que** l'unité de détection d'objet (40) est conçue pour détecter l'objet à contrôler (12) sous la commande d'un déclencheur.

10. Système selon la revendication 9, **caractérisé en ce que** l'unité de détection d'objet (40) est conçue pour détecter l'objet à contrôler (12) sur la section de contrôle d'objet (16) par une pluralité de déclencheurs déclenchés les uns après les autres, en synchronisant de préférence les déclencheurs individuels avec des éléments d'éclairage individuels (32), de sorte que la détection de réflexions parasites et de lumière diffusée parasite par l'unité de détection d'objet (40) est réduite à un minimum.

11. Système selon l'une des revendications 1 à 10, **caractérisé en ce que** l'unité d'alimentation en objet (20) est conçue de telle sorte qu'elle alimente individuellement la section de contrôle d'objet (16) avec un objet à contrôler (12) respectif d'une pluralité d'objets à contrôler (12).

12. Système selon l'une des revendications 1 à 11, **caractérisé en ce que** l'unité d'alimentation en objet (20) est conçue de telle sorte qu'elle transfère une pluralité d'objets à contrôler (12) toujours dans les mêmes position et orientation sur la section de contrôle d'objet (16).

13. Système selon l'une des revendications 1 à 12, **caractérisé en ce que** le système comprend une unité de collecte d'objet (26), l'unité de collecte d'objet (26) étant conçue pour réduire l'énergie cinétique de l'objet à contrôler (12).

14. Procédé pour contrôler la forme d'un objet à contrôler (12), comprenant les étapes suivantes consistant à :
éclairer la surface de l'objet à contrôler (12) ;
détecter la surface éclairée de l'objet à contrôler (12) ;
générer des données d'objet à contrôler (62) à partir de la surface détectée de l'objet à contrôler (12) ;
comparer les données d'objet à contrôler (62) avec des données de modèle de référence (72) pour l'objet à contrôler (12) ;
détecter les écarts entre les données d'objet à contrôler (62) et les données de modèle de référence (72), l'objet à contrôler (12) se déplaçant le long de la section de contrôle d'objet (16)
**caractérisé en ce que**
lorsque la surface de l'objet à contrôler (12) est éclairée, le rayonnement électromagnétique est réfléchi ou diffusé de manière diffuse sur une surface de paroi intérieure (36) d'une unité de diffusion (34), la surface de paroi intérieure (36) entourant la section de contrôle d'objet (16) sous la forme d'une coque partiellement sphérique ou sous la forme d'une coque d'un polyèdre convexe.

15. Procédé selon la revendication 14, **caractérisé par** les étapes consistant à
générer des données de position d'objet (64) à partir de la position et de l'orientation spatiales de l'objet à contrôler (12), à partir des données d'objet à contrôler (62) ;
générer un modèle de référence (74) représenté par des données de modèle de référence (72) ;
transformer les données de modèle de référence (72) à l'aide des données de position d'objet (64) en données de référence de comparaison (82),
où le modèle de référence (74) représenté par les données de modèle de référence (72) est tourné et déplacé dans les mêmes position et orientation spatiales que l'objet à contrôler (12) et des données de référence de comparaison bidimensionnelles (82) en découlant sont générées ; comparer les données de référence de comparaison (82) et les données d'objet à contrôler (62) ;
classer les écarts entre les données de référence de comparaison (82) et les données d'objet à contrôler (62).
